# FASCICULE DE BREVET EUROPEEN

(11) **EP 1 626 316 B1**
(45) Date de publication et mention de la délivrance du brevet: **26.05.2010**
(21) Numéro de dépôt: 04019277.5
(22) Date de dépôt: 13.08.2004
(51) Int. Cl.: G04C 17/00

(54) **Montre équipée d'une glace à fibres optiques**
Uhr mit Lichtleiternuhrenglas
Watch equipped with a fibre-optic glass

(43) Date de publication de la demande: 15.02.2006
(73) Titulaire: The Swatch Group Management Services AG, 2501 Biel (CH)
(72) Inventeur: Gyger, Thomas, 2316 Les Ponts-de-Martel (CH); Karapatis, Nakis, 2520 La Neuveville (CH)
(74) Mandataire: Ravenel, Thierry Gérard Louis

(56) Documents cités:
- GB-A- 1 579 088
- GB-A- 2 058 384
- US-A- 4 017 157
- US-A- 4 139 261
- US-A1- 2004 022 506

## Description

La présente invention concerne généralement un instrument portable, notamment une montre, comprenant une glace à effet optique original. Plus particulièrement, l'invention concerne une montre munie d'une glace à effet optique améliorant la lisibilité de l'information affichée par le dispositif d'affichage de la montre tout en conférant à la montre un effet esthétique nouveau et original.

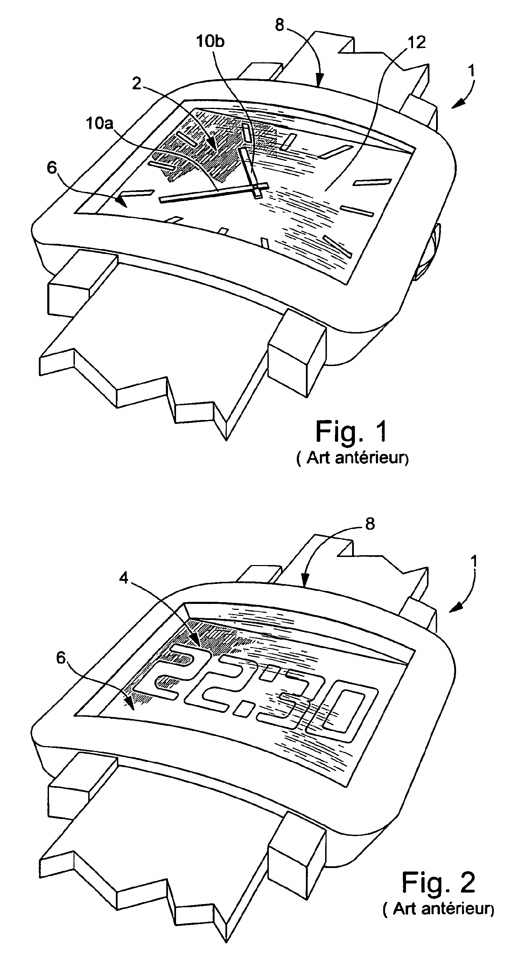

La figure 1 représente un exemple d'instrument portable de l'art antérieur, en l'occurrence une montre-bracelet 1 munie d'un dispositif d'affichage analogique 2, alors que la figure 2 représente une montre de l'art antérieur comprenant un dispositif d'affichage numérique 4. Pour des raisons de commodité, on désignera dans la suite de la description les éléments identiques par les mêmes références numériques.

Les dispositifs d'affichage 2, 4 sont protégés de l'environnement extérieur par une glace de protection 6 réalisée en verre synthétique ou minéral ou tout autre matériau transparent. Cette glace de protection 6 est montée sur la boîte 8 de l'instrument de manière que sa surface inférieure qui se trouve en regard du dispositif d'affichage 2, 4 s'étende à une certaine distance de celui-ci. Comme, cela ressort des figures 1 et 2, ce mode de montage d'une glace de protection sur la boîte 8 d'un instrument portable est couramment utilisé, que le dispositif d'affichage soit du type analogique 2, c'est-à-dire qu'il comprenne des aiguilles 10a, 10b se déplaçant au-dessus d'un cadran 12 ou du type numérique 4, c'est-à-dire qu'il comprenne une cellule d'affichage à cristal liquide dans laquelle un film de cristal liquide est emprisonné entre deux substrats munis sur leurs faces en regard d'un jeu d'électrodes définissant à leurs intersections une série de segments commutables pour afficher une information.

L'utilisation d'une glace de protection 6 conduit donc à faire apparaître au porteur de la montre l'information horaire affichée par le dispositif d'affichage comme étant à une certaine distance en dessous de la surface inférieure de la glace ce qui, d'une certaine manière, nuit à l'esthétique de la montre.

Par ailleurs, on sait qu'en raison des réflexions parasites de la lumière qui apparaissent au niveau de la glace de protection et au niveau du substrat supérieur de la cellule dans le cas d'une montre équipée d'un dispositif d'affichage numérique du type à cristal liquide, l'angle de vue sous lequel le porteur peut observer l'information affichée diminue proportionnellement avec l'augmentation de la distance entre la surface inférieure de la glace et le dispositif d'affichage. Le porteur de la montre est donc contraint d'incliner son poignet de manière que la face du cadran prenne une position sensiblement perpendiculaire à sa ligne de vue s'il veut limiter les effets des réflexions parasites et observer l'information horaire affichée sans gêne. Les réflexions parasites renvoyées vers l'observateur sont également indésirables en ce qu'elles affectent le contraste des éléments observés à travers la glace.

De plus, dans le cas des montres ou instruments équipés d'un dispositif d'affichage à cristaux liquides muni d'un polariseur sur le substrat supérieur, l'effet de ce dernier est perdu dans le cas de l'observation du dispositif selon un angle de vue trop important typiquement supérieur à xx°, si bien que les segments d'affichage non commutés deviennent visibles, ce qui nuit à la lisibilité de l'information affichée.

Un autre inconvénient classique des montres équipées d'un dispositif d'affichage analogique est que le porteur doit orienter la face du cadran de la montre de manière à ce qu'il soit sensiblement perpendiculaire à sa ligne de vue s'il veut éliminer ou limiter l'erreur de parallaxe à la lecture de l'affichage analogique.

On connaît le document GB1579088 qui décrit une montre à affichage numérique comportant une glace réalisée à partir d'une plaque formée d'un faisceau de fibres optiques.

La présente invention a pour but de remédier aux inconvénients susmentionnés ainsi qu'à d'autres encore en fournissant une montre permettant d'améliorer le confort de lecture des informations fournies par son dispositif d'affichage analogique, et ceci quel que soit l'angle selon lequel le dispositif d'affichage est observé par le porteur de la montre.

La présente invention a également pour but la production d'une montre ayant des aspects esthétiques nouveaux et originaux de manière simple et peu coûteuse.

La présente invention a donc précisément pour objet une montre électronique ou mécanique conforme à la revendication 1 du brevet.

L'utilisation de la plaque formée d'un faisceau de fibres optiques, comme dans le cas du document anglais sus-mentionné, permet ainsi de projeter les informations affichées par les moyens d'affichage à la surface supérieure de la plaque formant la glace de montre, de sorte que pour l'observateur les informations apparaissent comme étant « imprimées » sur la surface supérieure de cette glace, éliminant par là même les inconvénients liés aux réflexions parasites.

L'utilisation d'une telle plaque permet également d'améliorer l'esthétique générale de la montre en cachant à la vue de l'observateur l'espace situé entre la surface supérieure des moyens d'affichage et la surface inférieure de la glace, dans la mesure où la surface supérieure des moyens d'affichage est projetée sur la surface supérieure de la glace. Si la surface supérieure de la glace est sensiblement au même niveau que la surface de la lunette entourant la glace, on peut ainsi avantageusement obtenir une impression de continuité entre l'image projetée des moyens d'affichage et la lunette.

Selon un mode de réalisation avantageux de la montre selon l'invention, la plaque formée d'un faisceau de fibres optiques et formant la glace présente une face extérieure de forme non plane, par exemple de forme bombée sphérique ou bombée cylindrique.

Grâce à ces caractéristiques, on peut aisément réaliser des montres ayant des aspects esthétiques originaux. On peut notamment donner au porteur l'impression que la montre présente un cadran et des aiguilles, ou plus généralement un dispositif d'affichage, de forme non plane et ce en utilisant des dispositifs d'affichage analogiques ou numériques de type conventionnel.

D'autres caractéristiques et avantages de la présente invention apparaîtront plus clairement à la lecture de la description suivante d'exemples de réalisation, ladite description étant faite à titre non limitatif et en relation avec les dessins joints parmi lesquels :
- les figures 1 et 2, déjà décrites, représentent en perspective des montres de l'art antérieur munies respectivement d'un dispositif d'affichage analogique et d'un dispositif d'affichage numérique ;
- la figure 3 représente en perspective une montre selon un exemple qui ne fait pas partie de l'invention;
- la figure 4 représente une coupe selon la ligne IV-IV de la montre de la figure 3 ;
- la figure 5 représente en perspective une montre selon l'invention ;
- la figure 6 représente une coupe selon la ligne VI-VI de la montre de la figure 5 ;
- la figure 7 représente en perspective une montre selon un deuxièmeexemple qui ne fait pas partie de l'invention;
- la figure 8 représente une coupe selon la ligne VIII-VIII de la montre de la figure 7.

La description de l'invention va être faite dans le cadre d'une application à une pièce d'horlogerie telle qu'une montre bracelet. Il va toutefois de soi que l'invention n'est pas limitée à cette application et qu'elle pourra être avantageusement utilisée dans le cadre de toute autre application nécessitant l'affichage d'informations à l'aide d'affichages analogiques tels que des instruments de mesure, des téléphones portables, etc.

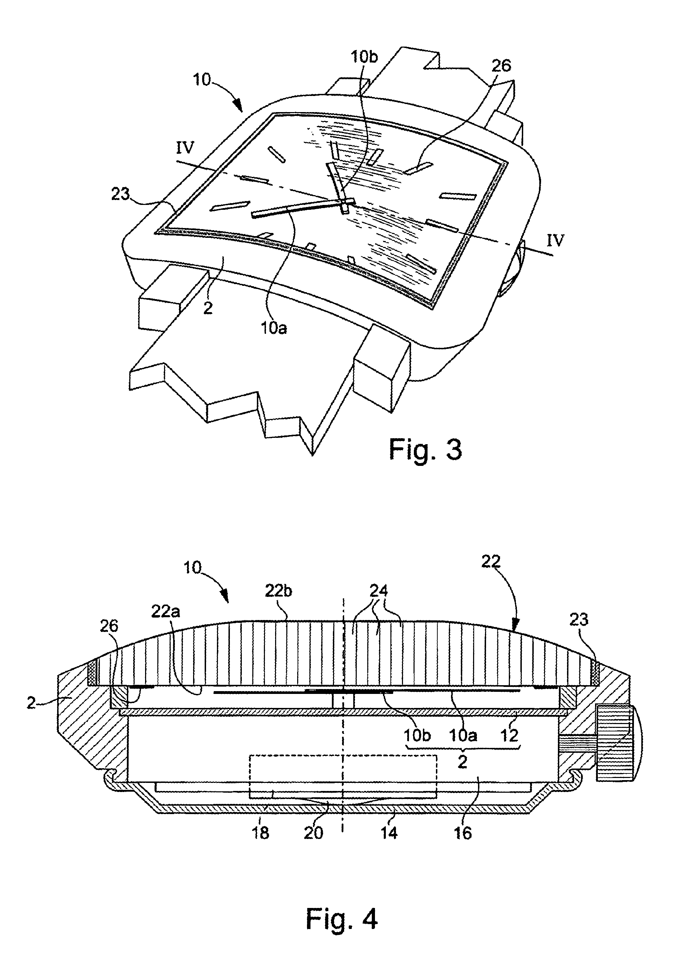

En se référant aux figures 3 et 4, on voit une pièce d'horlogerie du type montre bracelet désignée par la référence numérique générale 10. Cette montre 10 comprend classiquement une boîte 8 munie d'un fond 14 dans laquelle sont disposés un mouvement d'horlogerie électronique 16 et une pile 18 qui prend appui sur le fond 14 par l'intermédiaire d'un ressort de contact 20. Le mouvement 16 comprend des circuits électroniques garde-temps associés, via un circuit de commande, à un dispositif d'entraînement (non représenté) d'une aiguille des minutes 10a et d'une aiguille des heures 10b qui se déplacent au-dessus d'un cadran 12. Les aiguilles 10a, 10b et le cadran forment ensemble un dispositif d'affichage analogique 2. La boîte 8 est également fermée par une glace de protection 22 chassée dans la boîte via un joint d'étanchéité 23, la glace 22 recouvrant dans l'exemple illustré la totalité de la surface du cadran 12. La glace 22 présente une face inférieure 22a dirigée du coté du cadran 12 et une face supérieure 22b dirigée vers l'extérieur de la montre 1. Un chassage de la glace sans joint d'étanchéité peut aussi être envisagé. La face inférieure 22a est plane et s'étend sensiblement parallèlement au dispositif d'affichage 2 tandis que la face supérieure est de forme non plane par exemple bombée cylindrique. Cette construction est bien connue de l'homme du métier, aussi est-il inutile de la décrire de manière plus explicite.

La glace 22 est réalisée à partir d'une plaque comprenant une multitude de fibres optiques 24 arrangées parallèles entre elles pour former un faisceau. Les fibres optiques 24 sont orientées dans la plaque formant la glace 22 de manière à être perpendiculaires à la face inférieure 22a et par conséquent perpendiculaires au dispositif d'affichage 2. Typiquement, cette plaque est obtenue par découpage d'une tranche dans une barre formée d'une multitude de fibres optiques ayant quelques micromètres de diamètre et reliées ensemble par fusion de leur matière de gainage. Une fois la tranche découpée à l'épaisseur désirée, on adapte le contour de la tranche à la forme désirée, puis on procède au polissage des faces de la tranche et, le cas échéant, au façonnage d'une des faces pour obtenir la forme désirée, par exemple pour obtenir une glace de forme bombée cylindrique, bombée sphérique ou tout autre forme.

Pour une glace de montre l'épaisseur typique des plaques à faisceaux de fibres optiques utilisées varie de 1 mm à 5 mm.

Pour que la glace à fibres optiques 22 puisse transmettre une information située à proximité de sa face inférieure 22a vers sa surface supérieure 22b dans de bonnes conditions, c'est-à-dire pour que l'information qui apparaît au niveau de la surface supérieure 22b soit d'une netteté acceptable, l'information à transmettre via les fibres 24 doit être aussi proche que possible de la surface inférieure 22a de la glace. Typiquement, dans cet exemple, la surface supérieure des aiguilles 10a et 10b est de préférence située entre 50 et 250 µm de la surface inférieure 22a. On notera à ce propos que les index d'heures 26 sont avantageusement apposés directement sur la surface inférieure 22a de la glace. Il en va bien entendu de même de tout autre motif décoratif ou dénomination que l'on souhaiterait voir apparaître au niveau de la surface supérieure 22b de la glace 22.

Par la forme convexe de la surface extérieure 22b de la glace 22, on peut donner à l'observateur l'impression que la montre présente des aiguilles et un cadran convexe, ici de forme bombée cylindrique, conférant à la montre un caractère esthétique original.

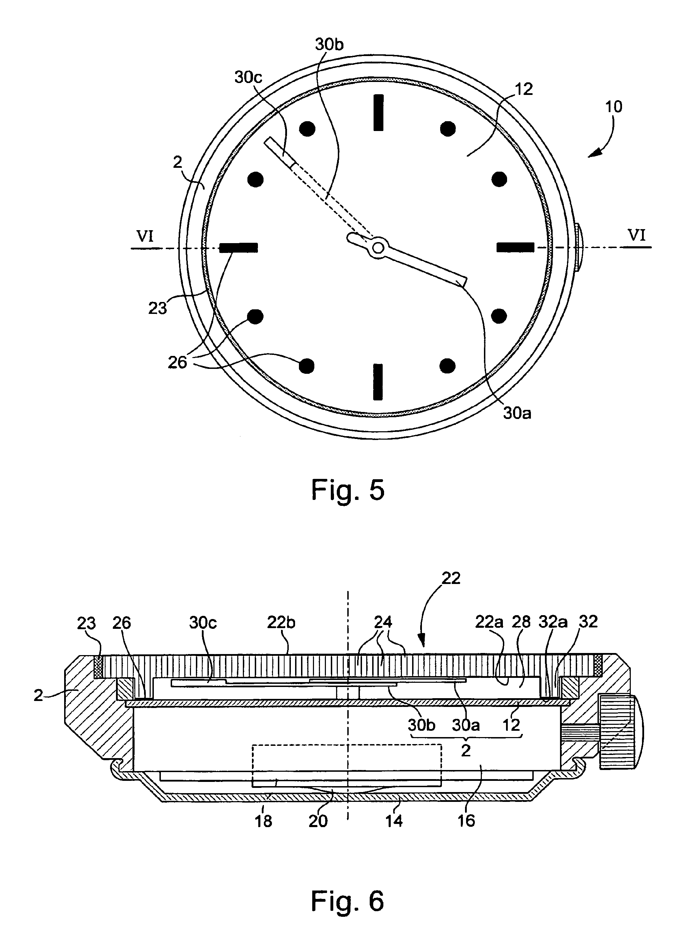

En se référant maintenant aux figures 5 et 6, on voit une montre selon le mode de réalisation de l'invention. La surface extérieure 22b de la glace selon l'invention est plane. En revanche, la surface inférieure 22a présente un évidement central 28 dans lequel se déplacent l'aiguilles d'heures 30a et l'aiguille des minutes 30b. Cet évidement central 28 délimite une nervure annulaire 32 présentant une surface annulaire frontale 32a. La surface annulaire 32a est de préférence en contact avec la portion de la surface supérieure du cadran 12, comprenant les index d'heures 26 ou autre indication. Il va de soi que la surface annulaire peut également s'étendre à proximité de ladite portion du cadran 12, de préférence à une distance comprise entre 50 et 250 µm du cadran .

On remarque également que les aiguilles d'heures 30a et de minutes 30b et leur montage à la surface du cadran ont été adaptés par rapport à un dispositif analogique conventionnel. En effet, dans l'invention contrairement à un montage classique, l'aiguille des heures 30b se déplace au-dessus de l'aiguille des minutes 30b. De plus, l'aiguille des minutes 30b comprend à son extrémité libre une portion de surface 30c qui s'étend sensiblement dans le même plan que ou au même niveau que la surface de l'aiguille des heures 30a se trouvant en regard de surface inférieure 22a de la glace 22. Ainsi, les deux aiguilles, respectivement des heures et des minutes, peuvent être amenées à égale distance et à proximité de la surface inférieure 22a de la glace 22 et améliorer encore la transmission de leur image via les fibres optiques 24 sur la surface supérieure 22b de la glace 22.

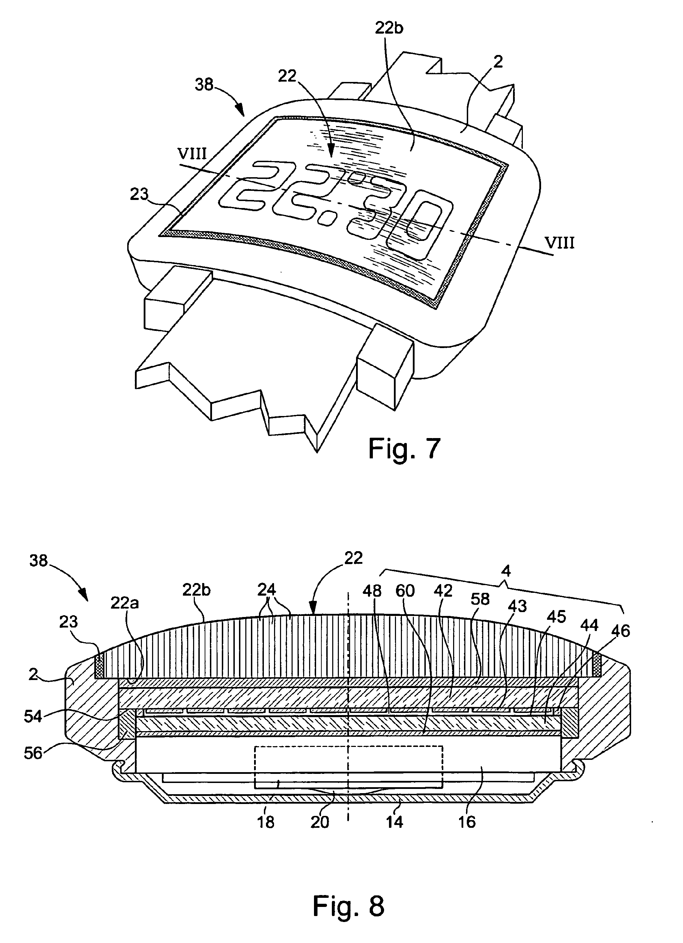

En se référant maintenant aux figures 7 et 8, on voit un deuxième exemple de réalisation d'une montre qui ne fait pas partie de l'invention. La montre 38 se distingue de la montre 10 selon l'invention essentiellement en ce que la glace de protection 22 est associée à un dispositif d'affichage numérique 4. Dans l'exemple illustré, le dispositif d'affichage est formé d'une cellule à cristal liquide 4, par exemple de type nématique en hélice (TN), qui fonctionne en réflexion. Il va de soi que d'autres types de cellules d'affichage numériques telles que des cellules d'affichage de type cholestérique peuvent être utilisés.

La cellule d'affichage TN 4 comprend un substrat supérieur 42 transparent, un substrat arrière 44 et un cadre de scellement 46 formant des moyens d'espacement et de fermeture délimitant avec les substrats 42 et 44 une cavité dans laquelle se trouve un film de cristaux liquides 48. Les faces en regard des substrats 42 et 44 comprennent des électrodes transparentes 50 et 52. Dans cet exemple, le substrat supérieur 42 porte des électrodes 43 configurées en digits formés chacun de segments permettant d'afficher des caractères alphanumériques, tandis que le substrat inférieur 44 porte une électrode 45 sur toute sa surface. Les électrodes 43 et 45 sont classiquement reliées à des moyens de commande (non représentés) intégrés au mouvement 16 via des plages de contact 54 et des connecteurs 56 pour leur fournir une tension de commande. La cellule 40 comprend en outre, du côté de la glace 22, un polariseur linéaire 58 et du côté du mouvement un film réflecteur 60.

Pour obtenir une transmission optique optimale de l'information affichée par la cellule d'affichage vers la surface extérieure 22b de la glace 22 on veillera à diminuer la distance entre l'image à afficher et la surface extérieure 22b, dans le cas présent entre le film de cristaux liquides et ladite surface extérieure 22b. Pour ce faire, on utilisera un substrat supérieur 42 et un polariseur aussi minces que possible. Typiquement, on préférera des substrats en matière plastique avec lesquels on peut réaliser des épaisseurs de l'ordre de 100µm pour des cellules ayant une surface de l'ordre de xx cm2. De même, on utilisera de préférence un polariseur sous forme d'une couche de quelques µm d'épaisseur qui peut être déposée sur le substrat supérieur 42 et de préférence sur la face dirigée vers le film de cristaux liquides de ce substrat 42. La surface inférieure 22a de la glace 22 est bien entendu disposée en contact étroit avec le substrat supérieur 42 pour réduire au maximum la distance entre l'image à afficher et la surface extérieure 22b de la glace 22.

Bien que la présente invention ait été décrite en relation avec des exemples de réalisation particuliers, il est clair, cependant, qu'elle n'est pas limitée auxdits exemples et qu'elle est susceptible de nombreuses variantes et modifications sans sortir de son cadre tel que défini dans les revendications. La surface supérieure 22b de la glace 22 pourra avantageusement comprendre une couche de protection contre les rayures et/ou être associée à une couche anti-reflet.

L'invention trouve en outre une application avantageuse à la réalisation d'un instrument électronique portable tel qu'un téléphone portable comprenant un boîtier dans lequel sont disposés des moyens d'affichage associés à des moyens de commande et des moyens d'alimentation électrique, des moyens de réception et des moyens d'émission de signaux radio fréquence. Les moyens d'affichage sont typiquement visibles à travers une ouverture ménagée dans le boîtier et l'ouverture est fermée par une plaque de protection formée d'un faisceau de fibres optiques.

## Revendications

1. Montre (10) comportant une boîte (8) munie d'une glace (22) réalisée à partir d'une plaque formée d'un faisceau de fibres optiques (24), la montre contenant des moyens d'affichage (2) pouvant être observés à travers la glace, **caractérisée en ce** lesdits moyens d'affichage (2) sont de type analogique et comprennent une aiguille des heures (30a) et une aiguille des minute (30b), en ce que l'aiguille des heures est agencée pour évoluer au-dessus de l'aiguille des minutes et en ce que l'aiguille des minutes présente une portion extrême (30c) s'étendant sensiblement au même niveau que l'aiguille des heures (30a).

2. Montre selon la revendication 1 **caractérisée en ce que** la distance entre la face inférieure de la glace et lesdits moyens d'affichage est comprise entre 50 et 250 µm et de préférence 125 µm.

3. Montre selon l'une quelconque des revendications précédentes, **caractérisée en ce que** des index et/ou des motifs sont apposés sur la face inférieure de la plaque à faisceau de fibres optiques.

4. Montre selon l'une quelconque des revendications précédentes comprenant en outre un cadran, **caractérisée en ce que** la face intérieure de la plaque à faisceau de fibres optiques présente un évidement central dans lequel les moyens d'affichage peuvent se déplacer et **en ce que** ledit évidement central délimite une surface annulaire s'étendant à proximité du cadran ou en contact avec celui-ci.

5. Montre selon l'une quelconque des revendications précédentes, **caractérisée en ce que** les fibres optiques sont arrangées parallèles entre elles et s'étendent perpendiculairement aux moyens d'affichage.

6. Montre selon l'une quelconque des revendications précédentes, **caractérisée en ce que** ladite glace présente une face extérieure de forme non plane.

7. Montre selon l'une quelconque des revendications précédentes, **caractérisée en ce que** la face extérieure de ladite glace est bombée sphérique.

8. Montre selon l'une des revendications 1 à 7, **caractérisée en ce que** la face extérieure de ladite glace est bombée cylindrique.

9. Montre selon l'une des revendications précédentes, **caractérisée en ce que** la face extérieure de la plaque à faisceau de fibres optiques comprend une couche de protection contre les rayures.

10. Montre selon l'une des revendications précédentes, **caractérisée en ce que** la face extérieure de la plaque à faisceau de fibres optiques comprend une couche anti-reflet.

11. Montre selon l'une quelconque des revendications précédentes **caractérisée en ce** la face inférieure de ladite glace formée d'un faisceau de fibres optiques présente un évidement central dans lequel les moyens d'affichage peuvent se déplacer et en ce que ledit évidement central délimite une surface annulaire.

12. Montre selon la revendication 11, **caractérisée en ce que** des index et/ou des motifs sont apposés sur la face inférieure de la plaque à faisceau de fibres optiques.

13. Montre selon la revendication 11, **caractérisée en ce que** des index et/ou des motifs sont apposés sur ladite surface annulaire inférieure de la plaque à faisceau de fibres optiques.

14. Montre selon l'une des revendications 11 à 13 comprenant un cadran au-dessus duquel se déplacent les moyens d'affichage, **caractérisée en ce que** la surface annulaire s'étend à proximité du cadran à une distance comprise entre 50 et 250 µm dudit cadran.

## Claims

1. Watch (10) including a case (8) fitted with a crystal (22) made from a plate formed of a fibre-optic bundle (24), the watch containing display means (2) that can be observed through the crystal, **characterized in that** said display means (2) are of the analogue type and include an hour hand (30a) and a minute hand (30b), **in that** the hour hand is arranged to move above the minute hand and **in that** the minute hand has an end portion (30c) that extends at approximately the same level as the hour hand (30a).

2. Watch according to claim 1, **characterized in that** the distance between the bottom surface of the crystal and said display means is comprised between 50 and 250 µm and is preferably 125 µm.

3. Watch according to any of the preceding claims, **characterized in that** symbols and/or designs are affixed to the bottom surface of the fibre-optic bundle plate.

4. Watch according to any of the preceding claims, further including a dial, **characterized in that** the inner surface of the fibre-optic bundle plate has a central recess in which the display means can move and **in that** said central recess delimits an annular surface that extends in proximity to the dial or in contact therewith.

5. Watch according to any of the preceding claims, **characterized in that** the fibre-optics are arranged parallel to each other and extend perpendicularly to the display means.

6. Watch according to any of the preceding claims, **characterized in that** said crystal has a non plane external surface.

7. Watch according to any of the preceding claims, **characterized in that** the external surface of said crystal is spherical and convex.

8. Watch according to any of claims 1 to 7, **characterized in that** the external surface of said crystal is cylindrical and convex.

9. Watch according to any of the preceding claims, **characterized in that** the external surface of the fibre-optic bundle plate includes a protective, anti-scratch layer.

10. Watch according to any of the preceding claims, **characterized in that** the external surface of the fibre-optic bundle plate includes an anti-reflective layer.

11. Watch according to any of the preceding claims, **characterized in that** the bottom surface of said crystal, formed of a fibre-optic bundle plate, has a central recess in which the display means can move and **in that** said central recess delimits an annular surface.

12. Watch according to claim 11, **characterized in that** symbols and/or designs are affixed to the bottom surface of the fibre-optic bundle plate.

13. Watch according to claim 11, **characterized in that** symbols and/or designs are affixed to said bottom annular surface of the fibre-optic bundle plate.

14. Watch according to any of claims 11 to 13, including a dial above which the display means move, **characterized in that** the annular surface extends in proximity to the dial at a distance of between 50 and 250 µm from said dial.

## Patentansprüche

1. Uhr (10), die ein Gehäuse (8) umfasst, das mit einem Uhrenglas (22) versehen ist, das anhand einer Platte hergestellt ist, die aus einem Lichtleitfaserbündel (24) gebildet ist, wobei die Uhr Anzeigemittel (2) enthält, die durch das Uhrenglas beobachtet werden können, **dadurch gekennzeichnet, dass** die Anzeigemittel (2) vom analogen Typ sind und einen Stundenzeiger (30a) sowie einen Minutenzeiger (30b) umfassen, dass der Stundenzeiger so angeordnet ist, dass er sich über dem Minutenzeiger bewegt, und dass der Minutenzeiger einen Endabschnitt (30c) aufweist, der sich im Wesentlichen in derselben Ebene wie der Stundenzeiger (30a) erstreckt.

2. Uhr nach Anspruch 1, **dadurch gekennzeichnet, dass** der Abstand zwischen der unteren Fläche des Uhrenglases und den Anzeigemitteln im Bereich von 50 bis 250 µm liegt und vorzugsweise 125 µm beträgt.

3. Uhr nach einem der vorhergehenden Ansprüche, **dadurch gekennzeichnet, dass** auf die untere Fläche der Platte aus einem Lichtleitfaserbündel Striche und/oder Muster aufgebracht sind.

4. Uhr nach einem der vorhergehenden Ansprüche, die außerdem ein Zifferblatt aufweist, **dadurch gekennzeichnet, dass** die untere Fläche der Platte aus Lichtleitfaserbündeln eine mittige Aussparung aufweist, in der sich die Anzeigemittel verlagern können, und dass die mittige Aussparung eine ringförmige Oberfläche begrenzt, die sich in der Nähe des Zifferblatts oder in Kontakt damit erstreckt.

5. Uhr nach einem der vorhergehenden Ansprüche, **dadurch gekennzeichnet, dass** die Lichtleitfasern zueinander parallel angeordnet sind und sich senkrecht zu den Anzeigemitteln erstrecken.

6. Uhr nach einem der vorhergehenden Ansprüche, **dadurch gekennzeichnet, dass** das Uhrenglas eine äußere Fläche mit nicht ebener Form aufweist.

7. Uhr nach einem der vorhergehenden Ansprüche, **dadurch gekennzeichnet, dass** die äußere Fläche des Uhrenglases sphärisch gewölbt ist.

8. Uhr nach einem der Ansprüche 1 bis 7, **dadurch gekennzeichnet, dass** die äußere Fläche des Uhrenglases zylindrisch gewölbt ist.

9. Uhr nach einem der vorhergehenden Ansprüche, **dadurch gekennzeichnet, dass** die äußere Fläche der Platte aus Lichtleitfaserbündeln eine Kratzschutzschicht enthält.

10. Uhr nach einem der vorhergehenden Ansprüche, **dadurch gekennzeichnet, dass** die äußere Fläche der Platte aus Lichtleitfaserbündeln eine Antireflexionsbeschichtung enthält.

11. Uhr nach einem der vorhergehenden Ansprüche, **dadurch gekennzeichnet, dass** die untere Fläche des Uhrenglases, das aus einem Lichtleitfaserbündel gebildet ist, eine mittige Aussparung aufweist, in der sich die Anzeigemittel verlagern können, und dass die mittige Aussparung eine ringförmige Oberfläche begrenzt.

12. Uhr nach Anspruch 11, **dadurch gekennzeichnet, dass** die Striche und/oder Muster auf die untere Fläche der Lichtleitfaserbündel-Platte aufgebracht sind.

13. Uhr nach Anspruch 11, **dadurch gekennzeichnet, dass** die Striche und/oder Muster auf die untere ringförmige Oberfläche der Lichtleitfaserbündel-Platte aufgebracht sind.

14. Uhr nach einem der Ansprüche 11 bis 13, die ein Zifferblatt aufweist, oberhalb dessen sich die Anzeigemittel verlagern, **dadurch gekennzeichnet, dass** sich die ringförmige Oberfläche in der Nähe des Zifferblatts in einem Abstand in einem Bereich von 50 bis 250 µm vom Zifferblatt erstreckt.
